Europäisches Patentamt

(19) European Patent Office

Office européen des brevets

(11) EP 0 866 573 A2

(12) EUROPEAN PATENT APPLICATION

(43) Date of publication:
23.09.1998 Bulletin 1998/39

(51) Int. Cl.⁶: H04B 10/155

(21) Application number: 98104022.3

(22) Date of filing: 06.03.1998

(84) Designated Contracting States:
AT BE CH DE DK ES FI FR GB GR IE IT LI LU MC
NL PT SE
Designated Extension States:
AL LT LV MK RO SI

(30) Priority: 19.03.1997 JP 65881/97

(71) Applicant: FUJITSU LIMITED
Kawasaki-shi, Kanagawa 211-8588 (JP)

(72) Inventors:
• Itou, Hiroyuki,
c/o Fujitsu H. Digital Techn. Ltd.
Sapporo-shi, Hokkaido 060-0807 (JP)

• Takahashi, Tsukasa,
Fujitsu H. Digital Techn. Ltd.
Sapporo-shi, Hokkaido 060-0807 (JP)

(74) Representative:
Ritter und Edler von Fischern, Bernhard, Dipl.-
Ing. et al
Hoffmann Eitle,
Patent- und Rechtsanwälte,
Arabellastrasse 4
81925 München (DE)

(54) **Optical transmission apparatus having automatic wavelength control function**

(57) The invention concerns an optical transmission apparatus; more particularly, the invention is directed to the provision of an optical transmission apparatus having a high receiver sensitivity wherein a wavelength tunable light source is used as a main signal source in an optical transmitter and the wavelength of the light source is made variable to be able to follow a pass-band wavelength drift of an optical filter. An automatic wavelength control circuit in the optical transmission apparatus comprises: a wavelength detector for monitoring the main signal light from the wavelength tunable light source, and for outputting a level signal proportional to the wavelength of the main signal light by passing the monitor signal light through a prescribed optical filter; and a wavelength controller for varying the wavelength of the main signal light by driving the wavelength tunable light source, and for determining the wavelength of the main signal light from a change in the level signal from the wavelength detector that follows the variation of that wavelength, and thereby setting and holding the wavelength of the main signal light from the wavelength tunable light source at a designated wavelength.

Fig.6

**Description**

BACKGROUND OF THE INVENTION

1. Field of the Invention

The present invention relates to an optical transmission apparatus, and more particularly to an optical transmission apparatus that uses a wavelength tunable light source as a main signal source in an optical transmitter, the wavelength of the light source being variable to follow a pass-band wavelength drift of an optical filter, and is adaptable for use in a system achieving a high receiver sensitivity using a narrowband filter.

2. Description of the Related Art

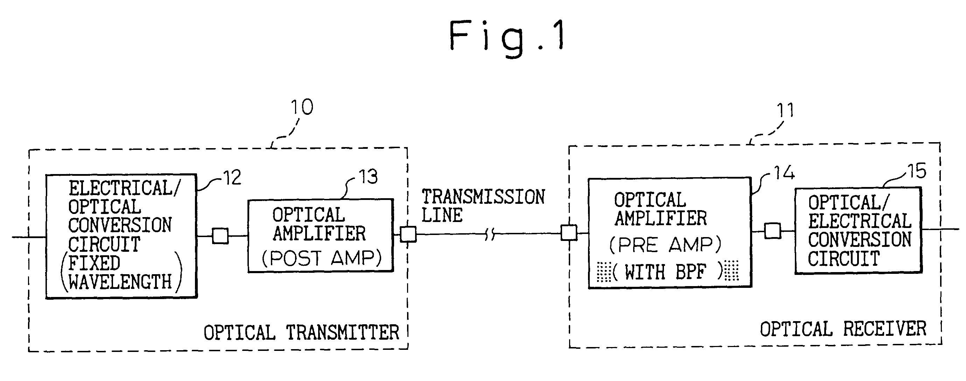

Figure 1 is a simplified block diagram showing an optical main signal transmission portion of a prior art optical transmission system. Though the optical main signal transmission portion of the prior art optical transmission system is shown in Figure 1, it will be noted that, depending on system configuration, there are also linear repeater systems wherein a linear repeater consisting only of an optical amplifier is installed at each regenerative repeater section along the transmission line.

In the prior art optical transmission system shown in Figure 1, at the optical transmitter 10 side, an electrical-to-optical conversion circuit 12 is provided that uses a fixed-wavelength laser diode (LD) as a light source for signal light, and an optical amplifier 13 of erbium (Er) doped optical fiber type is used to increase the transmission distance. At the receiver 11 side also, an optical amplifier 14 of the same type is used to further increase the transmission distance.

However, when optical signals are directly amplified by the erbium-doped optical fiber amplifiers 13 and 14 by using their optical pumping action, amplified spontaneous emission (ASE) is generated during the optical amplification process and is added as noise to the input signal light. To address this problem, a narrowband optical filter (BPF) that passes only the input signal light is provided at the output stage of the optical amplifier (PRE OPT AMP) 14 at the receiver 11 side.

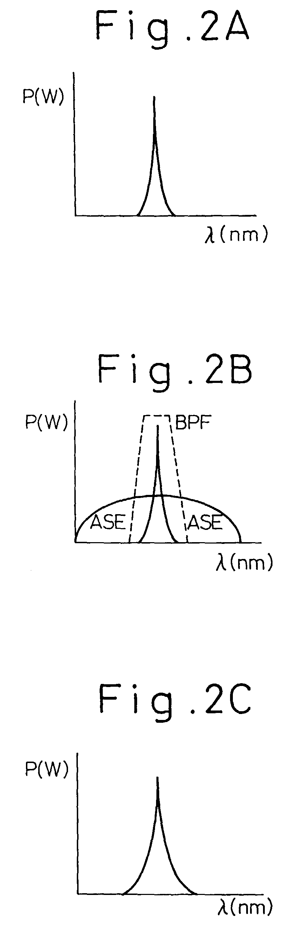

Figures 2A to 2C show examples of input signal light spectra at various portions of the optical transmission system of Figure 1.

Figure 2A shows an example of the signal light spectrum before optical amplification which corresponds, for example, to the spectrum of the output signal light from the electrical-to-optical conversion circuit 12 at the transmitter side in Figure 1. This signal light is optically amplified first by the optical amplifier 13 at the transmitter 10 side and then by the optical amplifier 14 at the receiver 11 side, and the resulting signal light has the spectrum shown in Figure 2B because of the amplified spontaneous emissions generated during the amplification processes.

The signal light is then passed through the band-pass filter (BPF) provided at the output stage of the optical amplifier 14 at the receiver 11 side. Figure 2C shows the spectrum of the thus filtered signal light and it can be seen that the band is somewhat stretched according to the pass band of the band-pass filter. In this way, the amplified spontaneous emission (ASE) is added as a noise component to the signal light, causing a degradation in the receiver sensitivity of the optical receiver 11.

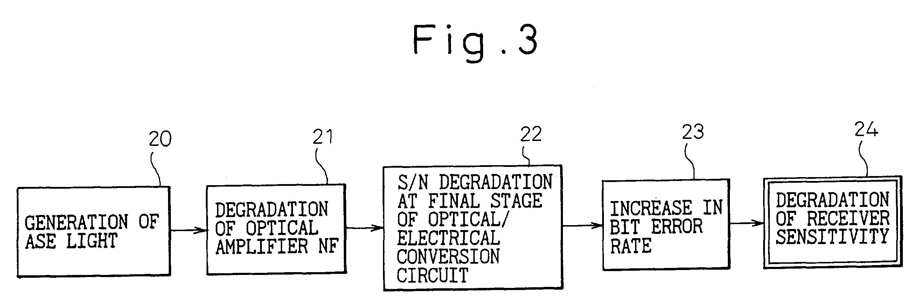

Figure 3 shows the process in which the noise component due to the amplified spontaneous emission is added to the signal light during optical amplification of the signal light, resulting in a decrease in the optical receiver sensitivity.

Amplified spontaneous emission (ASE) is generated due to optical amplification, as described above, and the noise figure (NF) of the optical amplifier degrades (20 and 21 in Figure 3). As a result, the signal-to-noise (S/N) ratio necessary for signal discrimination in the optical-to-electrical conversion circuit drops, so that the bit error rate increases and the receiver sensitivity thus drops (22 to 24 in Figure 3).

The following equation (1) shows the effect that the occurrence of amplified spontaneous emission (ASE) has on the noise figure (NF) of the optical amplifier, that is, the dispersion $\sigma0^2$ of the output light from the optical amplifier.

$$\sigma0^2 = \underbrace{\frac{G\langle n_i \rangle}{\text{Sig Shot}}}_{} + \underbrace{\frac{2(G\text{-}1)n_{sp}\Delta f}{\text{ASE Shot}}}_{} + \underbrace{\frac{2G(G\text{-}1)n_{sp}\langle n_i \rangle}{\text{Sig-ASE Beat}}}_{} + \underbrace{\frac{2(G\text{-}1)^2 n_{sp}^2 \Delta f}{\text{ASE-ASE beat}}}_{} \qquad (1)$$

G: Gain
$n_{sp}$: Population inversion factor
$\Delta f$: Optical filer bandwidth
$\langle n_i \rangle$: Average number of incident photons

From equation (1), it can be seen that when the gain G of the amplifier is large, noise components in the $G^2$ terms,

that is, noise components due to the Sig-ASE (signal light - amplified spontaneous emission) beat and ASE-ASE (amplified spontaneous emission - amplified spontaneous emission) beat in the third and fourth terms, become dominant. Accordingly, when the gain G is large (near minimum received power), the noise figure (NF) of the optical amplifier is expressed by the following equation (2).

$$NF = 10 \cdot \log(SNR_{IN}/SNR_{OUT}) = 10 \cdot \log\left(\frac{2n_{sp}}{Sig\text{-}ASE} + \frac{2n_{sp}^{2}\Delta f/\langle n_{i}\rangle^{2}}{ASE\text{-}ASE}\right) \text{ (dB)} \qquad (2)$$

From equation (2), it can be seen that the noise figure of the optical amplifier can be kept low by reducing the bandwidth $\Delta f$ of the optical filter. Therefore, when increasing the transmission distance and increasing the transmission speed of the main signal, if the required receiver sensitivity of the optical receiver is to be maintained, amplified spontaneous emission must be suppressed as much as possible by reducing the bandwidth of the optical filter.

However, when the bandwidth of the optical filter is reduced in order to increase the transmission distance and transmission speed, the wavelength tolerance of the main signal light source in the optical receiver also decreases. Furthermore, in a high-speed optical transmission system, usually a DFB (Distributed Feed-Back) laser that oscillates in one single mode is used as the main signal light source, but it is difficult to fabricate DFB laser with its oscillation wavelength accurate to the order of 1nm when the fabrication yield is considered.

Therefore, reducing the bandwidth of the optical filter and reducing the oscillation wavelength tolerance of the signal light source laser diode has involved the problem that the cost of the laser diode becomes very high because of fabrication yield, sorting, and other difficulties. Moreover, when using wavelength multiplex transmission or bidirectional optical transmission for transmission of optical signals, the laser diode must be capable of outputting light at multiple wavelengths spaced apart from each other at a few nanometers, but for the same reason as mentioned above, the fabrication and cost of such lasers has been a major problem.

On the other hand, in ordinary single wavelength transmission, when the oscillation wavelength tolerance of the signal light source laser diode (LD) is increased to a certain extent to suppress the cost of the laser diode, if the above-mentioned receiver sensitivity is to be maintained, it becomes necessary to widen the pass bandwidth of the optical filter while providing a sharper cut-off characteristic to cut off wavelengths outside the pass band.

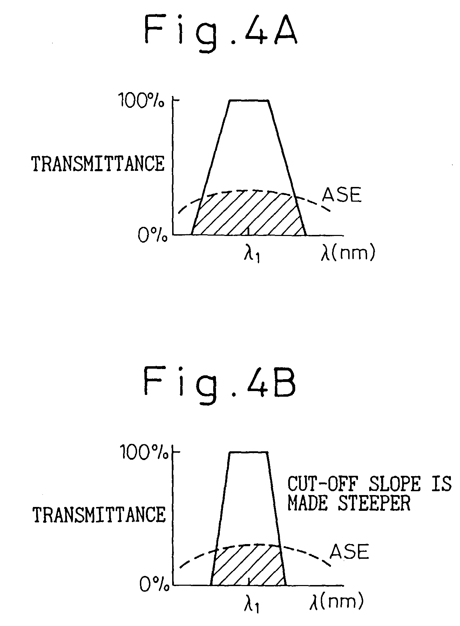

Figures 4A and 4B each show the relationship between the wavelength characteristic (cut-off characteristic) of an optical filter and the amount of amplified spontaneous emission noise.

Figure 4A depicts the characteristic of an optical filter whose cut-off slope is rather gentle, and Figure 4B shows that of an optical filter having a steep cut-off slope. Though both filters have the same pass band, the amount of amplified spontaneous emission is smaller for the latter filter, which is therefore suited when increasing the transmission distance and transmission speed.

However, in the case of commonly used dielectric multilayer filters, there is a limit to how sharp the cut-off characteristic can be made, because of the number of layers and the film deposition technology, though it depends on filter structure. At the present state of technology, therefore, there has been the problem that it is difficult to make the cut-off characteristic of the optical filter sharper while increasing the oscillation wavelength tolerance of the signal light source laser diode to a certain extent.

There is the further problem that the pass band of the optical filter drifts due to changes in ambient temperature, aging, etc.

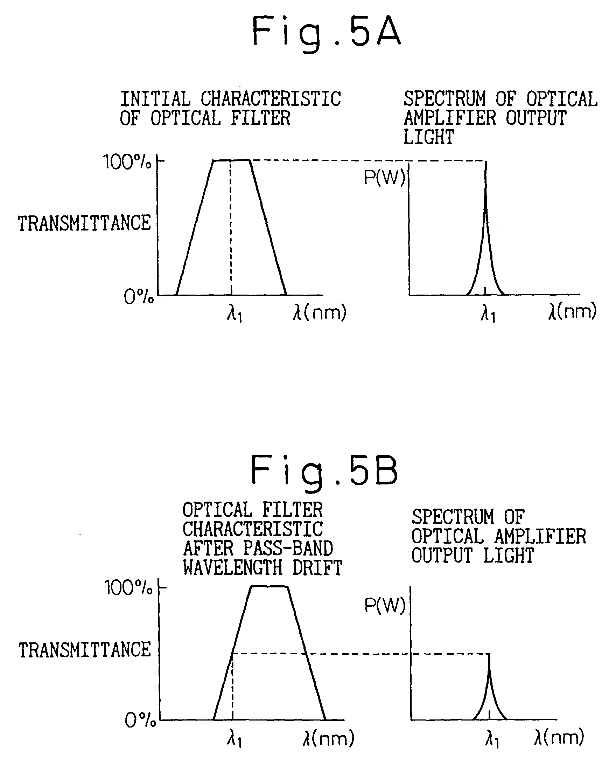

Figures 5A and 5B show the relationship between the drift of the pass-band wavelength of an optical filter and signal light attenuation.

The left side of Figure 5A shows an example of the initial characteristic of the optical filter before a drift occurs, and the right side of Figure 5A shows an example of the spectrum of optical amplifier output light corresponding to the filter characteristic shown at the left. In comparison, the left side of Figure 5B shows an example of the characteristic of the optical filter whose pass-band wavelength has drifted, and the right side of Figure 5B shows an example of the spectrum of optical amplifier output light corresponding to the filter characteristic shown at the left.

As can be seen from Figure 5B, if the pass-band wavelength of the optical filter drifts away from the oscillation wavelength of the signal light source laser diode, loss at the signal light wavelength increases, resulting in a degradation of the signal-to-noise (S/N) ratio and hence, a drop in receiver sensitivity.

To summarize the above, the prior art optical transmission system using a fixed-wavelength main signal light source has a variety of problems in that (1) reduced wavelength tolerance due to narrow-banding of the optical filter makes laser diode fabrication difficult, (2) the need for special wavelengths used for wavelength multiplex transmission or bidirectional optical transmission increases the fabrication difficulty of the laser diode, (3) the use of a narrowband optical filter causes degradation in receiver sensitivity when there occurs a drift in its pass-band wavelength, and (4) the fabrication costs of the laser diode, etc. increase if provisions are to be made to avoid such problems.

SUMMARY OF THE INVENTION

In view of the above-outlined problems, it is an object of the present invention to provide an automatic wavelength control circuit for an optical transmitter/receiver, wherein a wavelength tunable laser diode is used as a main signal light source and the light source wavelength is thus controlled to a designated value and is also variable to follow a pass-band wavelength drift of an optical filter.

According to the present invention, there is provided an optical transmission apparatus having an automatic wavelength control function that is implemented using as a main signal light source a wavelength tunable light source whose wavelength is controllable and an automatic wavelength control circuit for controlling the wavelength of main signal light from the wavelength tunable light source, the automatic wavelength control circuit comprising: a wavelength detector for monitoring the main signal light from the wavelength tunable light source, and for outputting a level signal proportional to the wavelength of the main signal light by passing the monitor signal light through a prescribed optical filter; and a wavelength controller for varying the wavelength of the main signal light by driving the wavelength tunable light source, and for determining the wavelength of the main signal light from a change in the level signal from the wavelength detector that follows the variation of that wavelength, and thereby setting and holding the wavelength of the main signal light from the wavelength tunable light source at a designated wavelength.

According to the present invention, there is also provided an optical transmission apparatus having an automatic wavelength control function that is implemented using as a main signal light source a wavelength tunable light source whose wavelength is controllable and an automatic wavelength control circuit for controlling the wavelength of main signal light from the wavelength tunable light source, wherein the automatic wavelength control circuit at the receiving end of the optical transmission apparatus comprises: a wavelength detector for monitoring main signal light received from a transmitter at the opposite end, and for outputting a level signal proportional to the wavelength of the main signal light by passing the monitor signal light through a prescribed filter; and a receive signal processor for obtaining wavelength drift information of the received main signal light from the level signal, and for transmitting the wavelength drift information to the transmitter at the opposite end, and the automatic wavelength control circuit at the transmitting end of the optical transmission apparatus comprises a transmit signal processor for receiving the wavelength drift information from a receiver at the opposite end, and for setting and holding the wavelength of the main signal light at the wavelength of the receiver at the opposite end by driving the wavelength tunable light source in accordance with the wavelength drift information.

BRIEF DESCRIPTION OF THE DRAWINGS

The present invention will be more fully understood from the description as set forth below with reference to the accompanying drawings, wherein:

Figure 1 is a simplified block diagram showing an optical main signal transmission portion of a prior art optical transmission system;
Figure 2A is a diagram showing one example of the spectrum of input signal light in the optical transmission system of Figure 1;
Figure 2B is a diagram showing one example of the spectrum of PRE-AMP output light before BPF filtering in the optical transmission system of Figure 1;
Figure 2C is a diagram showing one example of the spectrum of PRE-AMP output light after BPF filtering in the optical transmission system of Figure 1;
Figure 3 is a diagram illustrating how optical receiver sensitivity drops because of the addition of a noise component due to amplified spontaneous emission;
Figure 4A is a diagram showing the relationship between a mild wavelength characteristic (cut-off characteristic) of an optical filter and the amount of amplified spontaneous emission noise;
Figure 4B is a diagram showing the relationship between a steep wavelength characteristic (cut-off characteristic) of an optical filter and the amount of amplified spontaneous emission noise;
Figure 5A is a diagram showing the relationship between an initial characteristic of an optical amplifier and signal light attenuation;
Figure 5B is a diagram showing the relationship between the characteristic of the optical filter and signal light attenuation after a pass-band wavelength drift has occurred;
Figure 6 is a diagram showing one example of the configuration of an optical transmission apparatus using an automatic wavelength control circuit according to the present invention;
Figure 7A is a diagram showing a structural example of a wavelength tunable laser diode;
Figure 7B is a diagram showing an example of the DBR current versus output wavelength characteristic of the wavelength tunable laser diode of Figure 7A;

Figure 8 is a diagram showing a first embodiment of the automatic wavelength control circuit according to the present invention;

Figure 9A is a diagram showing an example of a control flow of a wavelength controller in Figure 8;

Figure 9B is a diagram showing the operating principle of the wavelength controller of Figure 8;

Figure 10 is a diagram showing a second embodiment of the automatic wavelength control circuit according to the present invention;

Figure 11A is a diagram showing an example of a control flow of the wavelength controller in Figure 10;

Figure 11B is a diagram showing an example of the characteristic of an LPF in Figure 10;

Figure 11C is a diagram showing the operating principle of the wavelength controller of Figure 10;

Figure 12 is a diagram showing a third embodiment of the automatic wavelength control circuit according to the present invention;

Figure 13A is a diagram showing an example of the characteristic of an HPF in Figure 12;

Figure 13B is a diagram showing an example of the characteristic of an LPF in Figure 12; and

Figure 14 is a diagram showing one embodiment in which the automatic wavelength control circuit of the present invention is adapted for use in a bidirectional optical transmission apparatus.

## DESCRIPTION OF THE PREFERRED EMBODIMENTS

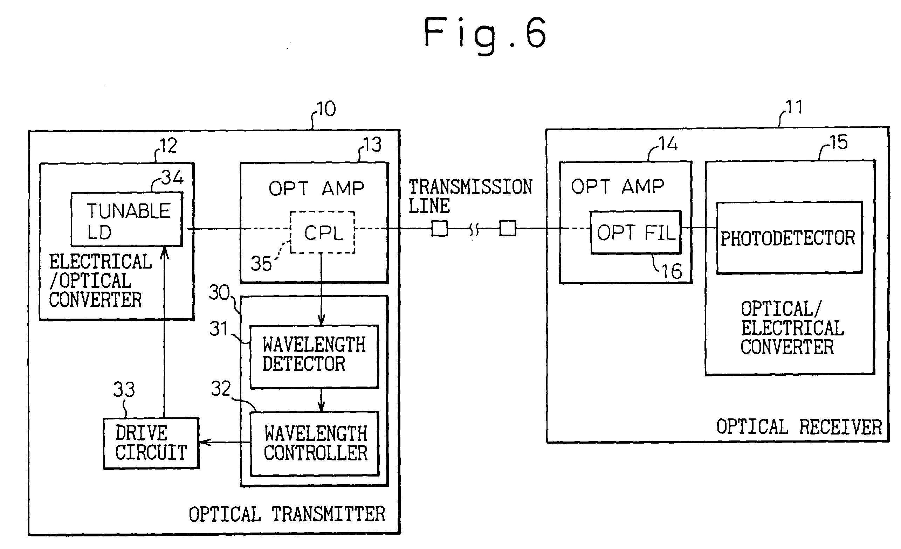

Figure 6 is a diagram showing one example of the configuration of an optical transmission apparatus using an automatic wavelength control circuit according to the present invention. In Figure 6, the same parts as those in the prior art example shown in Figure 1 are designated by the same reference numerals.

The control target of the automatic wavelength control circuit according to the present invention is the wavelength tunable laser diode (Tunable LD) 34 used as an electrical-to-optical conversion device in an electrical-to-optical converter 12.

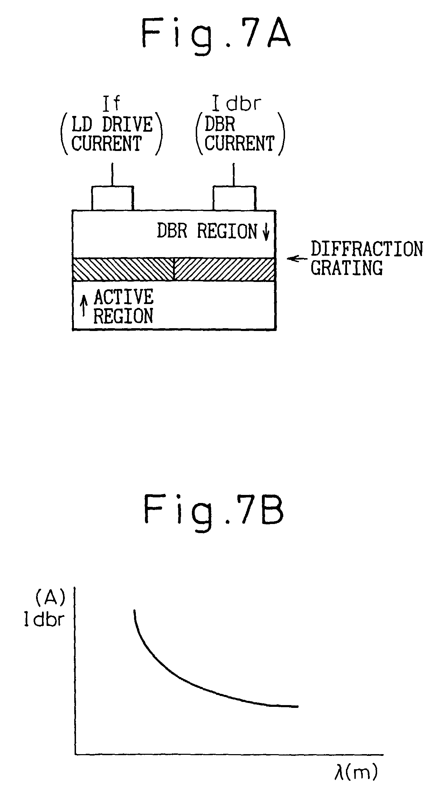

Figures 7A and 7B show one example of the wavelength tunable laser diode 34: Figure 7A illustrates a structural example of a DBR (Distributed Bragg Reflector) type laser diode (DBR LD), and Figure 7B depicts an example of the DBR current versus output wavelength characteristic of the DBR laser diode.

The wavelength tunability of the DBR laser diode is accomplished by utilizing the phenomenon that when carriers are injected into the DBR region shown in Figure 7A by applying a DBR current (Idbr), the Bragg wavelength changes because of the resulting plasma effect. As a result, the output wavelength can be varied in a controlled manner within a prescribed range by controlling the amount of DBR current (Idbr), as shown in Figure 7B.

Turning back to Figure 6, the signal light output from the wavelength tunable laser diode 34 is input to an optical coupler (CPL) 35 provided within the optical amplifier 13, where a portion of the signal light is separated and redirected to the automatic wavelength control circuit 30 of the present invention. In the automatic wavelength control circuit 30, a wavelength detector 31 detects the wavelength of the signal light and a wavelength controller 32 outputs a control signal so as to bring the detected wavelength of the signal light within the pass band of the optical filter 16.

The control signal is supplied to a drive circuit 33, which supplies a drive current proportional to the control signal to the wavelength tunable laser diode 34 in the electrical-to-optical converter 12. Thus the wavelength tunable laser diode 34 always outputs signal light controlled at a wavelength within the receiving wavelength range of the optical receiver 11.

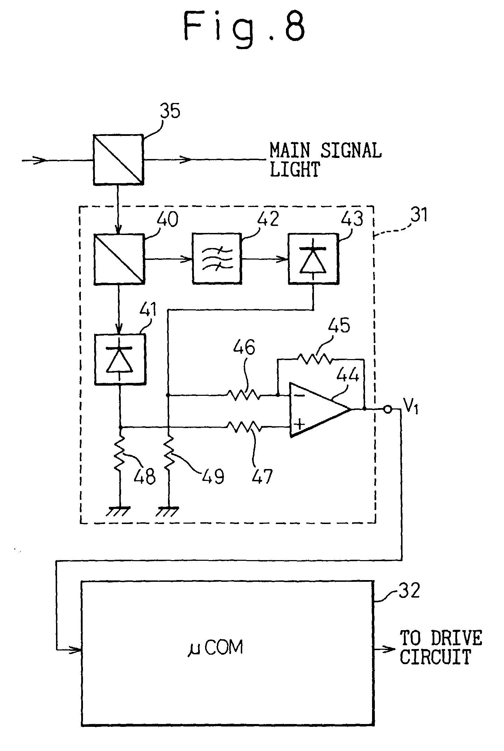

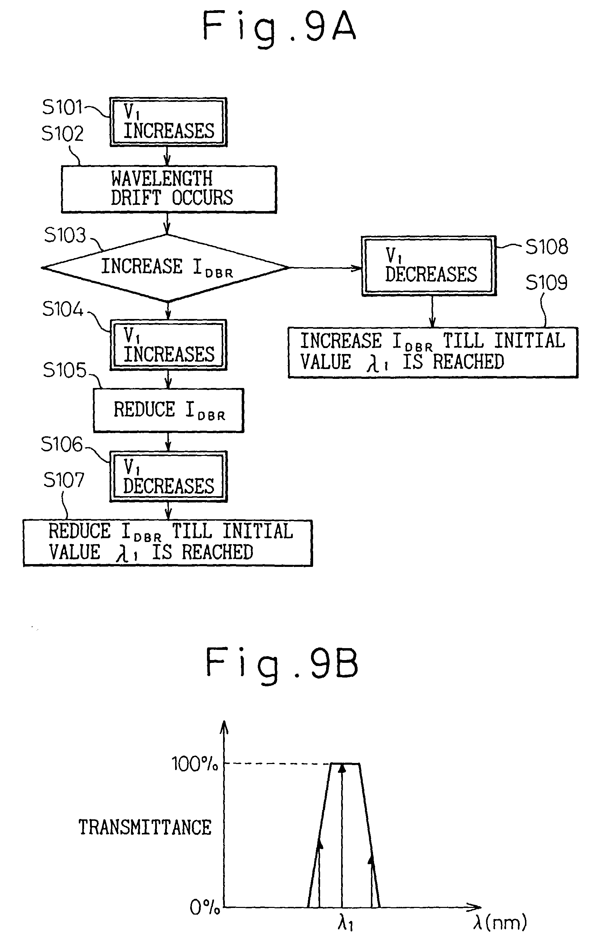

Figure 8 shows a first embodiment of the automatic wavelength control circuit (30 in Figure 6) according to the present invention. Figures 9A and 9B show an example of the control operation of the wavelength controller 32 in Figure 8: Figure 9A is a diagram illustrating an example of the control flow, and Figure 9B is a diagram for explaining the principle of the control operation.

In Figure 8, the portion of the signal light separated by the optical coupler 35 in the optical amplifier 13 (Figure 6) is input as monitor light to the wavelength detector 31 in the automatic wavelength control circuit 30. The monitor light is further split by an optical coupler 40 into two equal portions, one of which is transmitted through a band-pass filter (BPF) 42 and input to a photodiode 43 at the next stage for conversion into an electrical current signal proportional to the transmitted monitor light. The other portion of the monitor light is input directly to a photodiode 41 for conversion into an electrical current signal proportional to the monitor light.

A differential amplifier consisting of an operational amplifier 44 and resistors 45 to 49 compares the two electrical current signals and outputs a difference signal proportional to the difference between them. This difference signal is input to the wavelength controller 32 constructed from a microcomputer circuit ($\mu$COM). A one-chip microcomputer equipped with A/D and D/A converters at its input/output ports, for example, is used for the microcomputer circuit. Instead of implementing the wavelength controller 32 with the microcomputer circuit ($\mu$COM), the wavelength controller 32 may be constructed from an analog circuit which implements the hereinafter described control flow of Figure 9A in analog fashion.

When one of the two equally split portions of the monitor light passes through the band-pass filter 42, the amount of the light passed through it varies according to the wavelength of the monitor light, resulting in a change in the amount of the electrical current signal converted by the photodiode 43, the direction of the change being different according to that wavelength. The present embodiment utilizes this phenomenon. In Figure 9B, the transmittance of the band-pass filter 42 is set to 100% at and near the pass-band center wavelength (initial value) $\lambda_1$.

Accordingly, when the wavelength $\lambda$ of the monitor light is equal to the center wavelength $\lambda_1$, the two equally split portions of the monitor light are converted by the respective photodiodes 41 and 43 into electrical current signals of equal amount (the difference is zero). On the other hand, when the wavelength $\lambda$ of the monitor light is longer or shorter than the center wavelength $\lambda_1$, the amount of the monitor light passed through the band-pass filter 42 decreases because the transmittance decreases.

On which side of the center wavelength $\lambda_1$ the wavelength $\lambda$ of the monitor light lies can be determined based on the principle that when the wavelength $\lambda$ of the monitor light is made longer, the transmittance increases (the amount of transmitted monitor light increases) if the wavelength $\lambda$ is in the wavelength region shorter than the center wavelength $\lambda_1$, and decreases (the amount of transmitted monitor light decreases) if it is in the longer wavelength region, or conversely when the wavelength $\lambda$ of the monitor light is made shorter, the transmittance decreases (the amount of transmitted monitor light decreases) if the wavelength $\lambda$ is in the wavelength region shorter than the center wavelength $\lambda_1$, and increases (the amount of transmitted monitor light increases) if it is in the longer wavelength region.

The control flow shown in Figure 9A utilizes the above-described principle. More specifically, when a wavelength drift occurs with the amount of current from the photodiode 41 exceeding that from the photodiode 43, causing $V_1$ to increase, the wavelength controller 32 first increases the $I_{DBR}$ current (Figure 7) to decrease the monitor light wavelength $\lambda$ (S101 to S103). Here, if $V_1$ has decreased (the amount of transmitted monitor light has increased because the wavelength $\lambda$ is in the wavelength region longer than the center wavelength $\lambda_1$), the $I_{DBR}$ current is increased until the wavelength initial value $\lambda_1$ is reached where the decrease of $V_1$ stops (S108, S109).

Conversely, if $V_1$ has increased further (the amount of transmitted monitor light has decreased because the wavelength $\lambda$ is in the wavelength region shorter than the center wavelength $\lambda_1$), then the $I_{DBR}$ current is reduced to increase the monitor light wavelength $\lambda$ until it becomes equal to the wavelength initial value $\lambda_1$ (S103 to S107). With this control, the wavelength of the wavelength tunable laser diode can be set and maintained at the specified value.

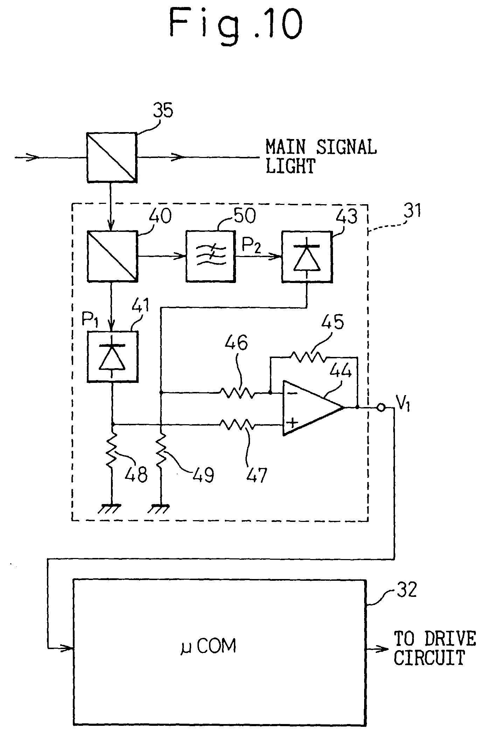

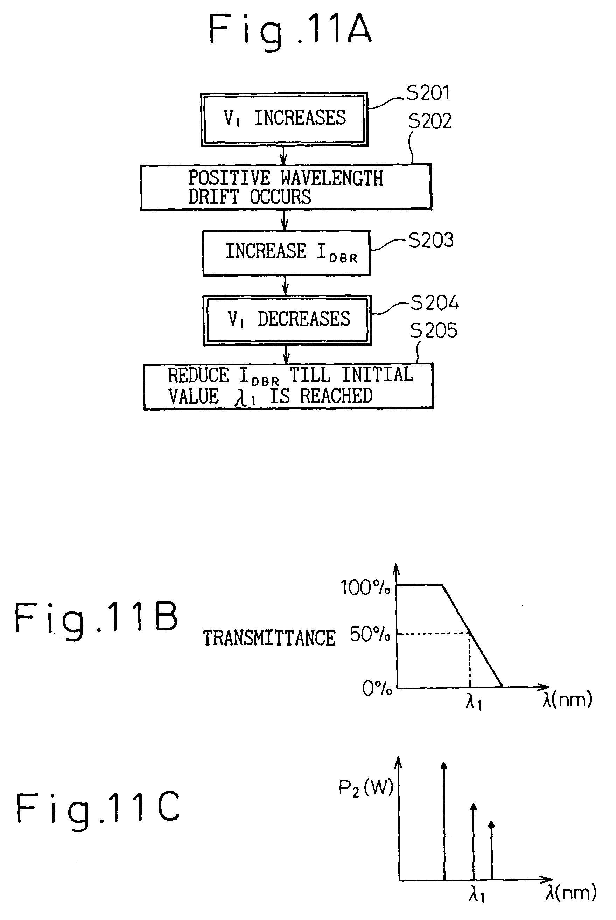

Figure 10 shows a second embodiment of the automatic wavelength control circuit according to the present invention. Figures 11A to 11C show a control example of the wavelength controller 32 in Figure 10: Figure 11A is a diagram illustrating an example of the control flow, and Figures 11B and 11C are diagrams for explaining the principle of the control operation.

The configuration shown in Figure 10 differs from that of Figure 8 only in that a low-pass filter 50 is used as the optical filter. As shown in Figures 11B and 11C, in the present embodiment, the wavelength initial value $\lambda_1$ is set to 50% of the transmittance of the low-pass filter 50. In this case, the resistor 48 in the differential amplifier is chosen to have a resistance value half that of the resistor 49 so that the difference is zero with the monitor light wavelength $\lambda_1$ of 50% transmittance.

In Figure 11A, if $V_1$ has increased (the amount of transmitted monitor light has decreased because the monitor light has drifted into the wavelength region longer than the center wavelength $\lambda_1$), then the $I_{DBR}$ current is increased to decrease the monitor light wavelength $\lambda$ (S201 to S203). Thereafter, if $V_1$ has decreased (the amount of transmitted monitor light has increased because the monitor light has drifted into the wavelength region shorter than the center wavelength $\lambda_1$), the $I_{DBR}$ current is reduced to increase the monitor light wavelength $\lambda$ until it becomes equal to the wavelength initial value $\lambda_1$ (S204, S205). In this way, by performing control using the low-pass filter 50, the wavelength of the wavelength tunable laser diode can be set and maintained at the specified value. It will also be recognized that similar control can be accomplished if a high-pass filter is used instead of the low-pass filter 50.

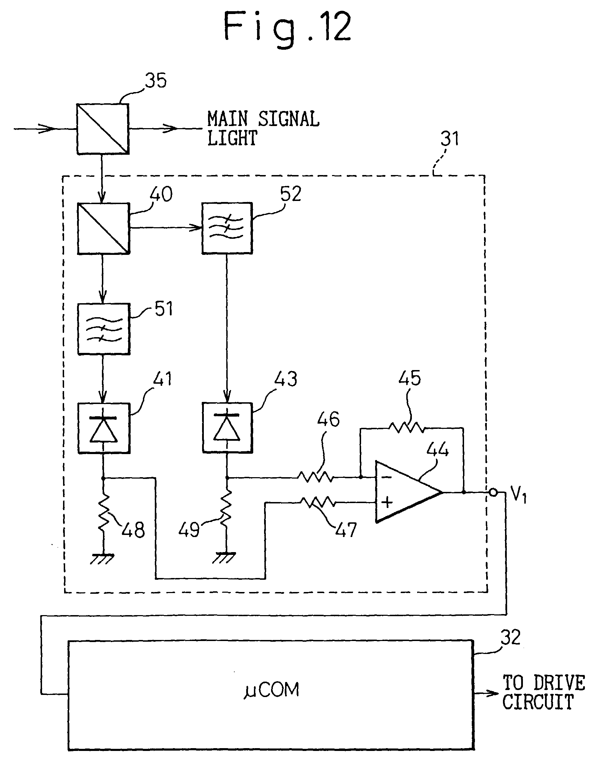

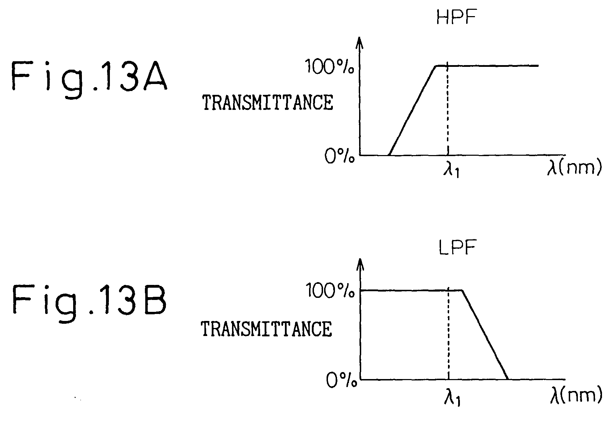

Figure 12 is a diagram showing a third embodiment of the automatic wavelength control circuit according to the present invention. Figures 13A and 13B are diagrams showing the principle of the control operation of the wavelength controller 32 in Figure 12.

In Figure 12, the optical filter is constructed using a high-pass filter 51 and a low-pass filter 52 which are combined as shown in Figures 13A and 13B to achieve a configuration equivalent to that of the first embodiment shown in Figure 8 (which uses a band-pass filter). Therefore, the operation of the third embodiment is essentially the same as that of the first embodiment, and no further explanation will be given here.

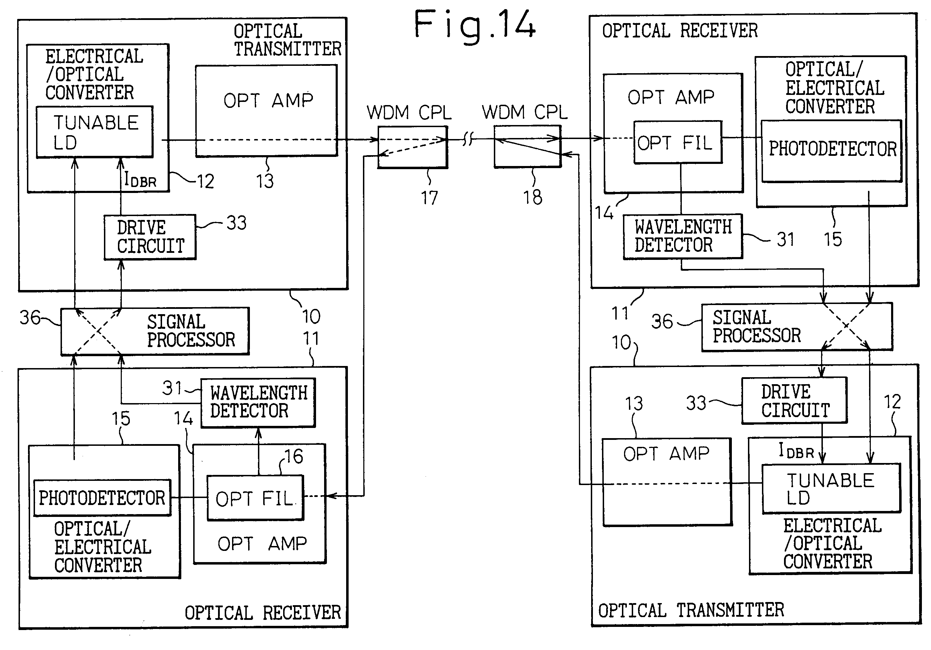

Figure 14 is a diagram showing an embodiment in which the automatic wavelength control circuit according to the present invention so far described is adapted for use in a bidirectional optical transmission apparatus.

In the first to third embodiments, the automatic wavelength control has been described as being performed independently at the optical transmitter side. In contrast, the present embodiment considers bidirectional communications that use wavelength-division multiplexing (WDM) for transmission of a plurality of optical signals at different wavelengths, and provides a configuration in which the wavelength control at the optical transmitter side is also performed so as to match the wavelength at the optical receiver side.

First, one wavelength is selected from among the plurality of signal light wavelengths in the optical receiver 10 at the transmitting end (in the left side of Figure 14), and is transmitted to the optical receiver 11 at the receiving end (in the right side of Figure 14). In the optical receiver 11, the wavelength detector 31 outputs a wavelength detection signal, as previously described. Next, a signal processor 36 obtains wavelength drift information, such as the wavelength drift of the received signal light and the direction of the drift, from the wavelength detection signal, and transmits the information via the optical transmitter 10 at the receiving end to the optical receiver 11 at the transmitting end (in the left side of Figure 14).

In accordance with the wavelength drift information received via the optical receiver 11, the signal processor 36 at the transmitting end performs control so that the output wavelength of the wavelength tunable laser diode 12 in the optical transmitter 10 is matched to the optical receiver 11 at the receiving end (in the right side of Figure 14). Thereafter, bidirectional communications are performed using the signal light of the selected wavelength.

The embodiment of Figure 14 has dealt with the case of WDM transmission, but it will be appreciated that in the case of bidirectional communications using single wavelength transmission, bidirectional optical communications can also be achieved using signal light of mutually matched wavelength by detecting and communicating drift information, such as the wavelength drift and the direction of the drift, in a similar manner to that described above.

As described above, when the automatic wavelength control apparatus of the present invention is used, signal light in an optical transmission system can be set and controlled at a designated wavelength and can also be made to follow the drift of the pass-band wavelength of the optical filter. This eliminates the fabrication problems of the laser diode and optical filter that would arise from reduced wavelength tolerance of the light source, obviates the need for wavelength discrimination at the time of replacement, and achieves cost reductions.

Furthermore, when the automatic wavelength control apparatus of the present invention is used in a bidirectional optical communication apparatus, the wavelength of signal light at one end can be easily matched to the signal light wavelength at the other end; this facilitates system expansion, modification, and replacement. Also, in bidirectional WDM communications, signal light wavelength used for communication can be easily selected.

## Claims

1. An optical transmission apparatus having an automatic wavelength control function that is implemented using as a main signal light source a wavelength tunable light source whose wavelength is controllable and an automatic wavelength control circuit for controlling the wavelength of main signal light from said wavelength tunable light source, said automatic wavelength control circuit comprising:

   a wavelength detector for monitoring the main signal light from said wavelength tunable light source, and for outputting a level signal proportional to the wavelength of said main signal light by passing said monitor signal light through a prescribed optical filter; and
   a wavelength controller for varying the wavelength of said main signal light by driving said wavelength tunable light source, and for determining the wavelength of said main signal light from a change in said level signal from said wavelength detector that follows the variation of said wavelength, and thereby setting and holding the wavelength of said main signal light from said wavelength tunable light source at a designated wavelength.

2. An optical transmission apparatus according to claim 1, wherein said wavelength detector includes:

   an optical coupler for separating said monitor signal light into two monitor signal beams;
   a first photodiode for converting one monitor signal beam separated by said optical coupler into an electrical signal;
   said prescribed optical filter through which is passed the other monitor signal beam separated by said optical coupler;
   a second photodiode for converting said other monitor signal beam passed through said prescribed optical filter into an electrical signal; and
   a differential amplifier for comparing outputs from said first photodiode and said second photodiode, and for outputting said level signal proportional to the difference between said outputs.

3. An optical transmission apparatus according to claim 2, wherein said wavelength detector further includes a prescribed optical filter through which is passed said one monitor signal beam separated by said optical coupler, and said one monitor signal beam passed through said optical filter is supplied to said first photodiode.

4. An optical transmission apparatus according to claim 2, wherein said prescribed optical filter is a band-pass filter.

5. An optical transmission apparatus according to claim 2, wherein said prescribed optical filter is a low-pass filter.

6. An optical transmission apparatus according to claim 2, wherein said prescribed optical filter is a high-pass filter.

7. An optical transmission apparatus according to claim 3, wherein said prescribed optical filter is a band-pass filter.

8. An optical transmission apparatus according to claim 3, wherein said prescribed optical filter is a low-pass filter.

9. An optical transmission apparatus according to claim 3, wherein said prescribed optical filter is a high-pass filter.

10. An optical transmission apparatus according to claim 1, wherein said wavelength controller varies the wavelength of said main signal light by driving said wavelength tunable light source in random directions along transmission characteristic slopes of said prescribed optical filter.

11. An optical transmission apparatus having an automatic wavelength control function that is implemented using, as a main signal light source, a wavelength tunable light source whose wavelength is controllable and an automatic wavelength control circuit for controlling the wavelength of main signal light from said wavelength tunable light source, wherein

the automatic wavelength control circuit at the receiving end of said optical transmission apparatus comprises: a wavelength detector for monitoring main signal light received from a transmitter at the opposite end, and for outputting a level signal proportional to the wavelength of said main signal light by passing said monitor signal light through a prescribed filter; and a receive signal processor for obtaining wavelength drift information of said received main signal light from said level signal, and for transmitting said wavelength drift information to said transmitter at the opposite end, and
the automatic wavelength control circuit at the transmitting end of said optical transmission apparatus comprises a transmit signal processor for receiving said wavelength drift information from a receiver at the opposite end, and for setting and holding the wavelength of said main signal light at the wavelength of said receiver at the opposite end by driving said wavelength tunable light source in accordance with said wavelength drift information.

# Fig.1

EP 0 866 573 A2

# Fig.2A

P(W)

λ(nm)

# Fig.2B

P(W)

BPF

ASE          ASE

λ(nm)

# Fig.2C

P(W)

λ(nm)

# Fig.3

20 — GENERATION OF ASE LIGHT

21 — DEGRADATION OF OPTICAL AMPLIFIER NF

22 — S/N DEGRADATION AT FINAL STAGE OF OPTICAL/ELECTRICAL CONVERSION CIRCUIT

23 — INCREASE IN BIT ERROR RATE

24 — DEGRADATION OF RECEIVER SENSITIVITY

# Fig.4A

# Fig.4B

# Fig.5A

INITIAL CHARACTERISTIC
OF OPTICAL FILTER

SPECTRUM OF OPTICAL
AMPLIFIER OUTPUT
LIGHT

100%

TRANSMITTANCE

0%

$\lambda_1$ $\lambda(nm)$

P(W)

$\lambda_1$ $\lambda(nm)$

# Fig.5B

OPTICAL FILTER
CHARACTERISTIC
AFTER PASS-BAND
WAVELENGTH DRIFT

SPECTRUM OF
OPTICAL AMPLIFIER
OUTPUT LIGHT

100%

TRANSMITTANCE

0%

$\lambda_1$ $\lambda(nm)$

P(W)

$\lambda_1$ $\lambda(nm)$

# Fig.6

EP 0 866 573 A2

# Fig.7A

# Fig.7B

# Fig.8

MAIN SIGNAL
LIGHT

35

40　42　43

31

41

45

46

44

V₁

48　49　47

32

μCOM

TO DRIVE
CIRCUIT

# Fig.9A

S101 — **V₁ INCREASES**

S102 —

**WAVELENGTH DRIFT OCCURS**

S103 — ◇ **INCREASE I_DBR** ⟶ S108 — **V₁ DECREASES**

S109 — **INCREASE I_DBR TILL INITIAL VALUE λ₁ IS REACHED**

S104 — **V₁ INCREASES**

S105 — **REDUCE I_DBR**

S106 — **V₁ DECREASES**

S107 — **REDUCE I_DBR TILL INITIAL VALUE λ₁ IS REACHED**

# Fig.9B

TRANSMITTANCE

100%

0%

λ₁    λ(nm)

# Fig.10

MAIN SIGNAL LIGHT

μ COM

TO DRIVE CIRCUIT

# Fig.11A

```
┌─────────────────────┐ ┐ S201
│   V₁  INCREASES     │ ─── S202
└─────────────────────┘
          │
          ▼
┌─────────────────────────┐
│ POSITIVE WAVELENGTH     │
│ DRIFT OCCURS            │
└─────────────────────────┘
          │
          ▼
┌─────────────────────┐
│ INCREASE I_DBR      │ ─── S203
└─────────────────────┘
          │
          ▼
┌─────────────────────┐ ┐ S204
│   V₁  DECREASES     │ ─── S205
└─────────────────────┘
          │
          ▼
┌──────────────────────────────┐
│ REDUCE I_DBR  TILL INITIAL   │
│ VALUE  λ₁  IS REACHED        │
└──────────────────────────────┘
```

# Fig.11B

# Fig.11C

19

# Fig.12

MAIN SIGNAL
LIGHT

35

31

40

52

51

41

43

46

45

44

47

$V_1$

48

49

32

μCOM

TO DRIVE
CIRCUIT

Fig.13A

Fig.13B

# Fig.14

OPTICAL TRANSMITTER

ELECTRICAL /OPTICAL CONVERTER

TUNABLE LD

$I_{DBR}$

DRIVE CIRCUIT — 33

12

OPT AMP

13

WDM CPL

17

WDM CPL

18

OPTICAL RECEIVER

OPT AMP

OPT FIL

14

WAVELENGTH DETECTOR — 31

OPTICAL/ ELECTRICAL CONVERTER

PHOTODETECTOR

15

SIGNAL PROCESSOR

36

10

11

SIGNAL PROCESSOR

36

11

10

DRIVE CIRCUIT

33

13

OPT AMP

$I_{DBR}$

TUNABLE LD

12

ELECTRICAL /OPTICAL CONVERTER

WAVELENGTH DETECTOR — 31

15

14

OPT FIL

16

PHOTODETECTOR

OPTICAL/ ELECTRICAL CONVERTER

OPT AMP

OPTICAL RECEIVER

OPTICAL TRANSMITTER

EP 0 866 573 A2